(19) Europäisches Patentamt
European Patent Office
Office européen des brevets

(11) Veröffentlichungsnummer: **0 278 299 B1**

# (12) EUROPÄISCHE PATENTSCHRIFT

(45) Veröffentlichungstag der Patentschrift: **27.12.91**

(51) Int. Cl.5: **C09B 62/503**, C09B 67/26, D06P 1/384

(21) Anmeldenummer: **88100990.6**

(22) Anmeldetag: **23.01.88**

Die Akte enthält technische Angaben, die nach dem Eingang der Anmeldung eingereicht wurden und die nicht in dieser Patentschrift enthalten sind.

## (54) Verfahren zur Herstellung einer konzentrierten wässrigen Reaktivfarbstoff-Lösung.

(30) Priorität: **07.02.87 DE 3703732**

(43) Veröffentlichungstag der Anmeldung:
**17.08.88 Patentblatt 88/33**

(45) Bekanntmachung des Hinweises auf die Patenterteilung:
**27.12.91 Patentblatt 91/52**

(84) Benannte Vertragsstaaten:
**CH DE FR GB LI**

(56) Entgegenhaltungen:
**EP-A- 0 153 599**
**EP-A- 0 199 056**
**EP-A- 0 210 378**

(73) Patentinhaber: **BAYER AG**

**W-5090 Leverkusen 1 Bayerwerk(DE)**

(72) Erfinder: **Steinbeck, Werner, Dr.**
**Haferkamp 3**
**W-5000 Köln 80(DE)**
Erfinder: **Harms, Wolfgang, Dr.**
**Walter-Flex-Strasse 21**
**W-5090 Leverkusen 1(DE)**

**EP 0 278 299 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der vorliegenden Erfindung ist ein Verfahren zur Herstellung einer konzentrierten lagerstabilen wäßrigen Lösung des Farbstoffs der Formel

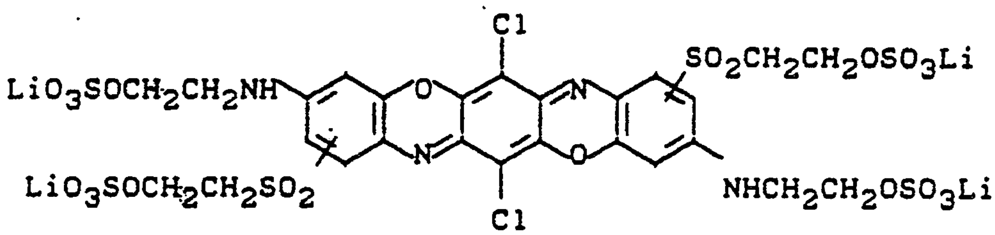

(I)

welches dadurch gekennzeichnet ist, daß man das aus dem Chinonderivat der Formel

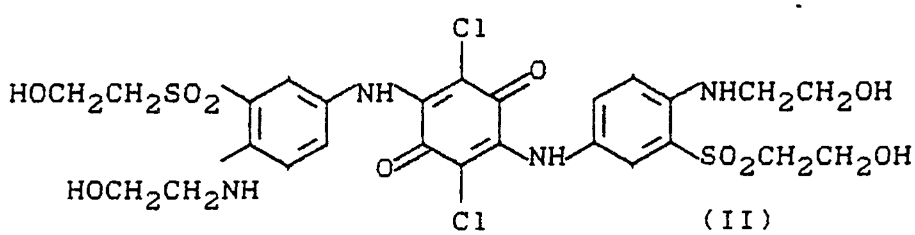

(II)

durch Sulfatierung und anschließende oxidative Cyclisierung, vorzugsweise mit Ammonium-, Natrium- oder Kaliumperoxodisulfat, in Oleum erhältliche Reaktionsgemisch mit Wasser oder Schwefelsäure auf eine Schwefelsäurekonzentration von 37-50 %, vorzugsweise 41-43 %, verdünnt, das dabei ausgefallene Produkt abtrennt und in Wasser mit basischen Lithiumverbindungen, vorzugsweise Lithiumcarbonat oder Lithiumhydroxid, auf einen pH-Wert von etwa 2-6, vorzugsweise 3-4 stellt.

Aus der EP-A-0 153 599 sind bereits Triphendioxazinvinylsulfon-Farbstoffe bekannt, Sie werden isoliert durch Aussalzen der Farbstoffe.

Erfindungsgemäß liegt die Farbstoffkonzentration in der Oleum-Schmelze im allgemeinen bei 10 bis 25 Gew.-%. Die Farbstoffkonzentration in der wäßrigen Lösung liegt im allgemeinen bei etwa 15 bis 20 Gew.-%. Das Verdünnen der Oleum-Schmelze mit Wasser erfolgt vorzugsweise derart, daß die Schmelze unter zusätzlicher Außenkühlung auf die entsprechende Menge Eis ausgetragen wird, wobei die Temperatur vorzugsweise unter 20 °C betragen soll.

Die Lösung kann falls erforderlich unter Zusatz üblicher Klärmittel, beispielsweise Aktivkohle, geklärt werden.

Die erhaltene Lösung ist im Temperaturbereich von 0 °C bis 50 °C längere Zeit stabil und kann direkt zum Färben und Bedrucken von Cellulosematerialien eingesetzt werden.

<u>Beispiel 1</u>

60,0 g des Kondensationsproduktes aus Chloranil und 3-(β-Hydroxyethylsulfonyl)-4-(β-hydroxyethylamino)-anilin mit der Formel

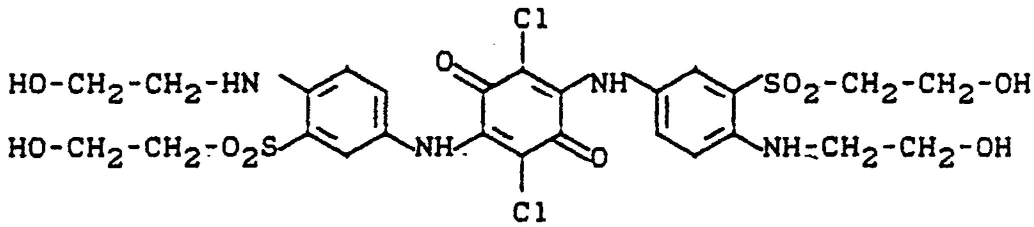

werden bei 20-25 °C unter Kühlen innerhalb einer Stunde in 336 ml 20 %iges Oleum eingetragen. Zur vollständigen Lösung wird eine Stunde nachgerührt. Darauf werden bei 20-25 °C unter Kühlen 46,8 g Kaliumperoxodisulfat im Verlauf einer Stunde portionsweise zugegeben. Nach einstündigem Nachrühren wird das Reaktionsgemisch unter zusätzlicher Außenkühlung auf 865 g Eis gegossen. Dabei soll die Temperatur nicht über 20 °C steigen. Nach dreistündigem Rühren wird der ausgefallene Farbstoff abgesaugt. Die Mutterlauge mit 43 % $H_2SO_4$ enthält nur 2 % der Farbstoffausbeute (Extinktionsmessung). Der Nutschkuchen (186 g) wird in 387 g Wasser angerührt und mit 43 g Lithiumcarbonat auf einen pH-Wert von 3 bis 4 eingestellt.

Die so erhaltene Farbstofflösung (590 g) ist nach 9 Monaten bei 20 °C oder jeweils 4 Wochen bei 0 °C oder 50 °C unverändert. Die Lösung kann nach entsprechender Verdünnung zum Färben von Baumwolle nach üblichen Verfahren eingesetzt werden.

Beispiel 2

Anstatt das Reaktionsgemisch auf Eis zu gießen, wie im Beispiel 1 angegeben, werden bei 0-5 °C vorsichtig 865 g Wasser unter guter Kühlung zugetropft. Anschließend wird weiter wie beim ersten Beispiel verfahren.

Beispiel 3

60,0 g des Kondensationsproduktes aus Chloranil und 3-(β-Hydroxyethylsulfonyl)-4-(β-hydroxyethylamino)-anilin werden unter Kühlen bei 20-25 °C in 168 ml 20 %iges Oleum eingetragen und gelöst. Sodann werden bei 20-25 °C unter Kühlen 41,2 g Natriumperoxodisulfat eingetragen. Der Reaktionsansatz wird noch eine Stunde bei dieser Temperatur nachgerührt und darauf unter zusätzlicher Außenkühlung bei höchstens 20 °C auf 408 g Eis gegossen. Nach dreistündigem Rühren wird der auskristallisierte Farbstoff abgesaugt. Die Muterlauge hat einen $H_2SO_4$-Gehalt von 43 %. Der Nutschkuchen (180 g) wird in 263 g Wasser verrührt und mit 42 g Lithiumcarbonat auf einen pH-Wert zwischen 3 und 4 gestellt.

Es resultieren 460 g einer lagerstabilen Farbstofflösung.

Beispiel 4

60,0 g des Kondensationsproduktes aus Chloranil und 3-(β-Hydroxyethylsulfonyl)-4-(β-hydroxyethylamino)-anilin werden unter Kühlung bei 20-25 °C in 168 ml 20 %iges Oleum eingetragen und gelöst. Danach werden bei 20-25 °C 39,5 g Ammoniumperoxodisulfat portionsweise zugegeben. Es wird eine Stunde nachgerührt. Der Ansatz wird dann bei höchstens 15 °C auf 920 g Eis/Wasser laufen gelassen. Zu der erhaltenen Farbstofflösung werden bei 15-20 °C 386 g 96 %ige Schwefelsäure getropft. Nach Rühren über Nacht wird der abgeschiedene Farbstoff abgesaugt. Die Mutterlauge enthält 42 % $H_2SO_4$. Der Nutschkuchen (160 g) wird in 350 g Wasser mit 37 g Lithiumcarbonat auf einen pH-Wert von 3 bis 4 eingestellt.

Die entstandene Lösung ist während mehrerer Monate bei 0 °C bis 25 °C oder 4 Wochen bei 40 °C unverändert haltbar.

**Patentansprüche**

**1.** Verfahren zur Herstellung einer konzentrierten wäßrigen Lösung des Farbstoffs der Formel

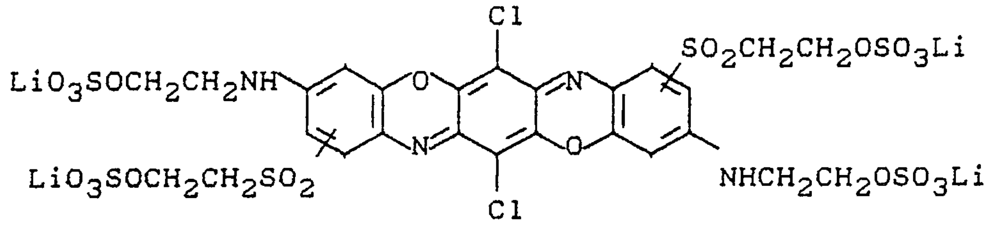

(I)

dadurch gekennzeichnet, daß man das aus dem Chinonderivat der Formel

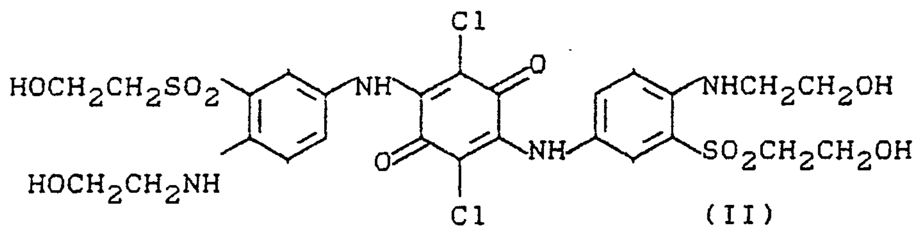

(II)

durch Sulfatierung und anschließende oxidative Cyclisierung, vorzugsweise mit Ammonium-, Natrium- oder Kaliumperoxodisulfat, in Oleum erhältliche Reaktionsgemisch mit Wasser oder Schwefelsäure auf eine Schwefelsäurekonzentration von 37-50 % verdünnt, das dabei ausgefallene Produkt abtrennt und in Wasser mit basischen Lithiumverbindungen auf einen pH-Wert von etwa 2-6 stellt.

2. Verfahren nach Anspruch 1, dadurch gekennzeichnet, daß das Verdünnen der Oleum-Schmelze bei maximal 20 °C erfolgt.

3. Verfahren nach wenigstens einem der vorhergehenden Ansprüche, dadurch gekennzeichnet, daß das Verdünnen durch Eingießen in Eis erfolgt.

4. Verfahren nach wnigstens einem der vorhergehenden Ansprüche, dadurch gekennzeichnet, daß die oxidative Cyclisierung mit Ammonium-, Natrium- oder Kaliumperoxodisulfat erfolgt.

5. Verfahren nach wenigstens einem der vorhergehenden Ansprüche, dadurch gekennzeichnet, daß man das Reaktionsgemisch mit Wasser oder Schwefelsäure auf eine Schwefelsäurekonzentration von 41 bis 43 % verdünnt.

6. Verfahren nach wenigstens einem der vorhergehenden Ansprüche, dadurch gekennzeichnet, daß man als Lithiumverbindung Lithiumcarbonat oder Lithiumhydroxid verwendet.

7. Verfahren nach wenigstens einem der vorhergehenden Ansprüche, dadurch gekennzeichnet, daß man mit der basischen Lithiumverbindung einen pH-Wert von 3 bis 4 einstellt.

8. Verwendung der nach wenigstens einem der vorhergehenden Ansprüche erhaltenen Lösung zum Färben und Bedrucken von Cellulosematerialien.

9. Farbstofflösung, erhalten nach wenigstens einem der vorhergehenden Ansprüche.

## Claims

1. Process for the preparation of a concentrated aqueous solution of the dyestuff of the formula

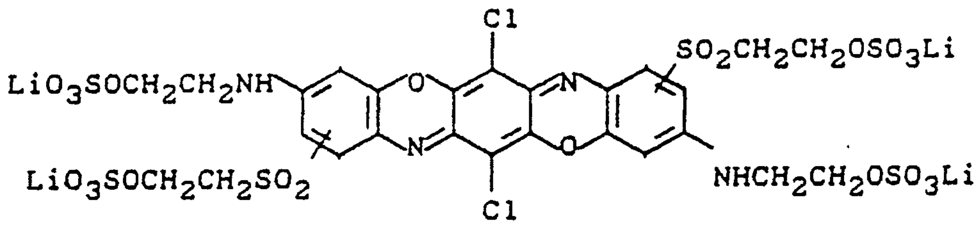

(I)

characterised in that the reaction mixture obtainable from the quinone derivative of the formula

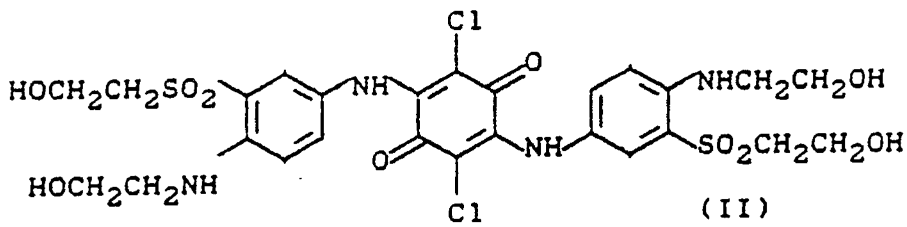

(II)

by sulphation and subsequent oxidative cyclisation, preferably with ammonium, sodium or potassium peroxodisulphate, in oleum is diluted with water or sulphuric acid to a sulphuric acid concentration of 37-50%, and the product which precipitates is separated off and brought to a pH of about 2-6 in water using basic lithium compounds.

2. Process according to Claim 1, characterised in that the dilution of the oleum melt takes place at a maximum temperature of 20° C.

3. Process according to at least one of the preceding claims, characterised in that the dilution takes place by pouring the melt into ice.

4. Process according to at least one of the preceding claims, characterised in that the oxidative cyclisation takes place with ammonium, sodium or potassium peroxodisulphate.

5. Process according to at least one of the preceding claims, characterised in that the reaction mixture is diluted with water or sulphuric acid to a sulphuric acid concentration of 41 to 43%.

6. Process according to at least one of the preceding claims, characterised in that the lithium compound used is lithium carbonate or lithium hydroxide.

7. Process according to at least one of the preceding claims, characterised in that the pH is brought to 3 to 4 using the basic lithium compound.

8. Use of the solution obtained according to at least one of the preceding claims for dyeing and printing cellulose materials.

9. Dyestuff solution, obtained according to at least one of the preceding claims.

## Revendications

1. Procédé de préparation d'une solution aqueuse concentrèe du colorant de formule :

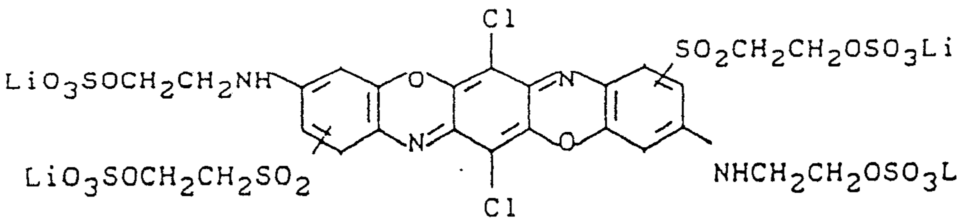

(I)

caractérisé en ce que, partant du mélange de réaction obtenu dans l'oléum à partir du dérivé de la quinone de formule :

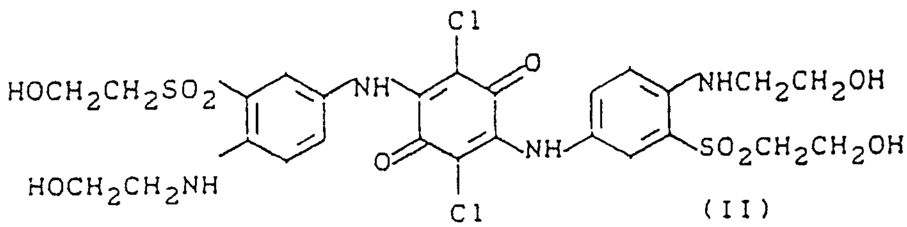

(II)

par sulfatation suivie d'une cyclisation oxydative, de préférence à l'aide du peroxodisulfate d'ammonium, de sodium ou de potassium, on dilue ce mélange de réaction par l'eau ou l'acide sulfurique jusqu'à une concentration en acide sulfurique de 37 à 50, on sépare le produit qui a précipité et on le règle dans l'eau à un pH d'environ 2 à 6 au moyen de composés basiques du lithium.

2. Procédé selon la revendication 1, caractérisé en ce que la dilution de la masse dispersée dans l'oléum est réalisée à une température maximale de 20° C.

3. Procédé selon au moins une des revendications qui précèdent, caractérisé en ce que la dilution est réalisée par coulée sur glace.

4. Procédé selon au moins une des revendications qui précèdent, caractérisé en ce que la cyclisation oxydative est réalisée à l'aide du peroxodisulfate d'ammonium, de sodium ou de potassium.

5. Procédé selon au moins une des revendications qui précèdent, caractérisé en ce que l'on dilue le mélange de réaction par l'eau ou l'acide sulfurique jusqu'à une concentration en acide sulfurique de 41 à 43%.

6. Procédé selon au moins une des revendications qui précèdent, caractérisé en ce que le composé du lithium qu'on utilise est le carbonate de lithium ou l'hydroxyde de lithium.

7. Procédé selon au moins une des revendications qui précèdent, caractérisé en ce que l'on règle à un pH de 3 à 4 à l'aide du composé basique de lithium.

8. Utilisation de la solution obtenue selon au moins une des revendications qui précèdent pour la teinture et l'impression de matières cellulosiques.

9. Solution de colorant obtenue selon au moins une des revendications qui précédent.